# EUROPÄISCHE PATENTSCHRIFT

(11) **EP 3 110 603 B1**
(45) Veröffentlichungstag und Bekanntmachung des Hinweises auf die Patenterteilung: **23.05.2018**
(21) Anmeldenummer: 15707113.5
(22) Anmeldetag: 26.02.2015
(51) Int. Cl.: B29B 11/16

(54) **HERSTELLUNG GEKRÜMMTER PREFORMEN**
PRODUCTION OF CURVED PREFORMS
FABRICATION DE PRÉFORMES CURVILIGNES

(30) Priorität: 28.02.2014 DE 202014100927 U
(43) Veröffentlichungstag der Anmeldung: 04.01.2017
(73) Patentinhaber: Deutsches Zentrum für Luft- und Raumfahrt e.V., 51147 Köln (DE)
(72) Erfinder: STAHL, Arne, 38106 Braunschweig (DE); BORGWARDT, Henrik, 38118 Braunschweig (DE); HÜHNE, Christian, 30173 Hannover (DE)
(74) Vertreter: Aisch, Sebastian
(86) Internationale Anmeldenummer: PCT/EP2015/054049
(87) Internationale Veröffentlichungsnummer: WO 2015/128425

(56) Entgegenhaltungen:
- EP-A1- 2 722 145
- EP-A2- 2 633 965
- DE-A1-102009 008 329

## Beschreibung

Die Erfindung betrifft eine Vorrichtung und ein Verfahren zur Herstellung einer gekrümmten Preform aus flächigen Faserhalbzeugen.

Aufgrund der besonders vorteilhaften Eigenschaft, bei einem relativ geringen Gewicht in zumindest eine Richtung eine sehr hohe Steifigkeit aufzuweisen, eignen sich Faserverbundbauteile für eine Vielzahl von Anwendungszwecken. Dabei werden derartige Faserverbundbauteile vermehrt auch für lasttragende Strukturen im Fahrzeug- und Flugzeugbereich eingesetzt, um bspw. durch die Reduzierung des Gesamtgewichtes Treibstoff einsparen zu können.

Faserverbundbauteile werden in der Regel aus einem Faserhalbzeug und einem Matrixmaterial, bspw. ein Kunststoff, gebildet. Durch imprägnieren der Faserhalbzeugen mit dem Matrixmaterial vor oder während des Herstellungsprozesses werden die Fasern des Faserhalbzeuges von dem Matrixmaterial umschlossen und bilden so nach Aushärtung des Matrixmaterials ein integrales Bauteil. Die lasttragenden Fasern des Faserhalbzeuges, die nunmehr in das ausgehärtete Matrixmaterial eingebettet sind, verleihen dem Bauteil seine hohe Steifigkeit in Faserrichtung.

Die Bauteilform wird in der Regel durch drapieren der Faserhalbzeugen in oder auf ein sogenanntes Formwerkzeug gebildet. Das Formwerkzeug weist eine Oberflächenstruktur auf, die der Bauteilgeometrie des herzustellenden Faserverbundbauteils entspricht, wobei die trockenen oder vorgetränkten Faserbelege an die Oberfläche angepasst werden. Bei komplizierten Strukturen können die Faserhalbzeuge auch durch andere Methoden in die gewünschte Form gebracht werden, was allgemein als "Preformen" bezeichnet wird. Faserhalbzeuge, die entweder in dem Formwerkzeug oder in einem anderen Umformprozess die gewünschte Bauteilgeometrie erhalten haben, werden als "Preform" bezeichnet. Demnach ist eine Preform ein aus Faserhalbzeugen gebildetes Halbzeug, das zumindest teilweise die Bauteilgeometrie des herzustellenden Faserverbundbauteils aufweist.

Ein Vorteil von Faserverbundbauteilen besteht darin, dass die Fasern lastgerecht orientiert werden können, um hohe Lasten bei geringem Gewicht übertragen zu können. Bei Lasten quer zur Faserrichtung des Faserverbundbauteils können dagegen nur schwer getragen werden, sodass die Bauteile in der Regel quer zur Faserrichtung instabiler sind.

So ist es für gekrümmte Profile, wie bspw. Z- oder C-Profile, die hauptsächlich auf Biegung beansprucht werden, sehr wichtig, dass die Orientierung der Fasern entlang der Profillänge konstant bleibt. Am Beispiel eines kreisförmig gebogenen Profils bedeutet dies, dass ein Koordinatensystem, nach dem sich die Faserorientierung richtet, auf dem Bauteil um den Kreismittelpunkt rotieren und den Fasern in jedem Punkt auf dem Bauteil eine andere Orientierung vorgeben würden. Aufgrund der größeren Umfangslänge des Außengurtes bzw. Außenflansch des Profils muss das Fasermaterial im Bereich des Außengurtes gestreckt und damit der ursprünglich rechtwinklige Faserwinkel zwischen den einzelnen Fasern verändert werden.

Bei Verfahren, bei denen vorab zugeschnittene Faserhalbzeuge drapiert werden, entsteht jedoch der Nachteil, dass die Zuschnitte sich in den Randbereichen anders verhalten als in der Mitte des Zuschnittes. Daraus resultieren variierende Faserwinkel in der gesamten Preform. Dadurch kann jedoch nicht sichergestellt werden, dass im gesamten Profil die geforderten Faserwinkel auftreten.

Darüber hinaus haben derartige Verfahren den Nachteil, dass sie meistens einen hohen manuellen Arbeitsaufwand aufweisen, was sie für größere Stückzahlen unwirtschaftlich machen und keine reproduzierbare Qualität gewährleisten können. Dies liegt in der Tatsache begründet, dass der Drapiervorgang, in dem das Material verschert wird, nicht definiert und somit nicht mit genügend großer Wiederholgenauigkeit durchgeführt werden kann.

So ist bspw. aus der DE 10 2008 032 574 A1 eine Vorrichtung zur Herstellung faserverstärkter Bauteile bekannt, bei der an einem Grundrahmen eine Drapiereinrichtung vorgesehen ist, mit welcher die Fasergelege über Anlegen eines Vakuums an den Formkern drapierbar sind. Diese Art der Zwangsverformung der Fasergelege hat jedoch den Nachteil, dass auch hier eine definierte und reproduzierbare Verscherung der Faser nicht gewährleistet werden kann. Darüber hinaus kann es aufgrund von Reibung an dem Formkern bei der Drapierung des Fasergeleges dazu kommen, dass das Fasermaterial beschädigt wird, was die Stabilität des späteren Bauteils stark beeinträchtigt.

Aus der DE 10 2012 101 706 A1 und der EP 2 633 965 A2 ist eine Vorrichtung zur Herstellung einer gekrümmten Preform bekannt, bei der mittels zweier Walzkörper, die in Walzrichtung beabstandet voneinander angeordnete sind, aufgrund einer zwischen den beiden Walzkörpern eingestellten Umlaufgeschwindigkeitsdifferenz eine Verscherung von an den Walzkörpern anliegenden Faserhalbzeugen bewirkt wird. Hierbei entsteht jedoch der Nachteil, dass durch Verschiebungen der Faserhalbzeuge in der Faserhalbzeugebene die Verscherung nicht entlang der vorgegebenen Walzbahn auf dem Faserhalbzeug erfolgt, sodass unterschiedliche Verscherwinkel innerhalb der Faserorientierung der verscherten Faserhalbzeuge entstehen können. Der automatisierte Verscherprozess wird somit unter Umständen nicht bzgl. der vorgegebenen Qualität re-Aus der nachveröffentlichten EP 2 722 145 A2 ist ein ähnliches Prinzip bekannt, bei dem die Walzkörper verschwenk- oder verkippbar vorgesehen.

Aus der DE 10 2009 008 329 A2 ist schließlich eine Preform-Vorrichtung zum Preformen eines Textilhalbzeuges bekannt, wobei das Verscheren mit Hilfe einer Verscherwalze, die einen konischen Verlauf hat, durchgeführt werden soll.

Es ist daher Aufgabe der vorliegenden Erfindung eine verbesserte Vorrichtung und ein verbessertes Verfahren zur Herstellung gekrümmter Preformen anzugeben, mit der eine definierte Verscherung mit reproduzierbarer Verscherqualität automatisiert erreicht werden kann.

Die Aufgabe wird erfindungsgemäß mit der Vorrichtung gemäß Anspruch 1 sowie dem Verfahren gemäß Anspruch 9 gelöst.

Erfindungsgemäß wird eine Vorrichtung vorgeschlagen, die eine Verschereinrichtung aufweist, die aus mindest zwei rotierenden Walzkörpern besteht. Die rotierenden Walzkörper sind in Förderrichtung bzw. in Walzrichtung voneinander beabstandet angeordnet und mit einer Steuereinrichtung verbunden, welche die Umlaufgeschwindigkeit für jeden Walzkörper separat einstellen kann. Somit lässt sich für jeden Walzkörper eine Umlaufgeschwindigkeit einstellen, die von der Umlaufgeschwindigkeit des anderen Walzkörper verschieden sein kann.

Die Walzkörper sind in der Verschereinrichtung nun derart angeordnet und ausgebildet, dass sie kraftschlüssig an einem in der Vorrichtung eingebrachten Faserhalbzeug anliegen. Wird nun eine Umlaufgeschwindigkeitsdifferenz eingestellt, in dem die voneinander beabstandet angeordneten Walzkörper jeweils unterschiedliche Umlaufgeschwindigkeiten aufweisen, so wird durch die Umlaufgeschwindigkeitsdifferenz zwischen den Walzkörpern an eine Verscherung der Fasern des Faserhalbzeuges bewirkt, die letztlich in einer definierten Krümmung des Faserhalbzeuges resultiert. Denn durch eine Verscherung der Fasern, bspw. durch Ziehen oder Stauchen des flächigen Faserhalbzeuges, kann dem flächigen Faserhalbzeug eine definierte Krümmung durch die definierte Verscherung gegeben werden.

Um die Genauigkeit der Verscherung mittels der Walzkörper zu erhöhen, wird des Weiteren erfindungsgemäß vorgeschlagen, dass die Walzkörper insbesondere in einer durch das kraftschlüssig anliegende Faserhalbzeug definierten Faserhalbzeugebenen verschwenk- oder verkippbar ausgebildet sind sodass sich der Angriffswinkel zwischen dem Walzkörper und dem Fasermaterial verändern lässt. Dadurch wird es möglich, mit Hilfe der Walzkörper eine Kraft quer zur Förderrichtung in das Faserhalbzeug einzubringen, wodurch die Fördertrajektorie in Bezug auf die Walzkörper verändert werden kann.

Erfindungsgemäß ist des Weiteren vorgesehen, dass eine Faserhalbzeug-Erfassungseinrichtung vorhanden ist, die zum Erfassen von Positionsinformationen des durch die Verschereinrichtung geförderten Faserhalbzeuges ausgebildet ist. Mit Hilfe derartiger Positionsinformationen, die insbesondere in Bezug zu den angeordneten Walzkörpern stehen kann, kann ermittelt werden, mit welcher Ausrichtung das flächige Faserhalbzeug durch die Verschereinrichtung gefördert wird. Denn ändert sich die Position, mit der die Walzkörper kraftschlüssig an dem Faserhalbzeug anliegen, insbesondere in Bezug auf die äußere Abmessung des Faserhalbzeuges, so weicht die dabei entstehende Verscherung von der gewünschten Soll-Verscherung der Fasern ab, da das Faserhalbzeug nunmehr an einer veränderten Bahn durch die Verschereinrichtung gefördert wird. Durch die veränderte Angriffposition der Walzkörper in Bezug auf das flächige Faserhalbzeug entsteht bei gleichbleibender Umlaufgeschwindigkeitsdifferenz eine von der Soll-Verscherung abweichende Verscherung.

Erfindungsgemäß ist die Steuereinrichtung nun so eingerichtet, dass sie den oder die verschwenk- oder verkippbar ausgebildeten Walzkörper so ansteuert, dass in Abhängigkeit von der erfassten Positionsinformationen des Faserhalbzeug während der Verschereinrichtung die Walzkörper verschwenkt oder verkippt werden, um so Bahnabweichungen bei der Förderung durch die Verschereinrichtung zu kompensieren. Denn durch das Verschwenken oder Verkippen der Walzkörper in der Faserhalbzeugebene kann die Position bzw. die Bahn des Faserhalbzeuges bei der Förderung durch die Verschereinrichtung entlang der Walzkörper verändert werden, sodass bspw. immer ein gleichbleibender Abstand der Walzkörper in Bezug auf die Kanten des Faserhalbzeuges einstellbar wird.

Hierdurch wird eine aktive Bahnregelung bei der Förderung eines flächigen Faserhalbzeuges durch eine Verschereinrichtung, die das flächige Faserhalbzeug mittels kraftschlüssig anliegender Walzkörper und einer zwischen der eingestellten Umlaufgeschwindigkeitsdifferenz verscheren, ermöglicht, sodass reproduzierbar eine definierte Soll-Verscherung des flächigen Faserhalbzeuges realisiert werden kann.

Durch das Verschwenken bzw. Verkippen der Walzkörper ändert sich der Angriffswinkel zwischen dem Walzkörper und dem Fasermaterial und eine senkrecht wirkende Kraft wird hierdurch in das Fasermaterial eingebracht, die das Fasermaterial in die Kipp- oder Verschwenkrichtung, in die der Walzkörper verkippt oder verschwenkt wurde, fördert. Hierdurch kann das Faserhalbzeug insgesamt in die eine oder andere quer zur Förderrichtung liegende Richtung gefördert werden, um so ein Ausweichen des Fasermaterials aus der vorgegebenen Förderbahn entgegenzuwirken und diese zu kompensieren.

Als Walzkörper kommen hierbei jegliche rotierbare Körper in Betracht, die kraftschlüssig an dem Fasermaterial anliegen können und aufgrund der Umlaufgeschwindigkeitsdifferenz eine Verscherung der Fasern bewirken können.

Die Walzkörper können dabei beliebige Formen von bspw. Zylinder- oder Kegelformen, aufweisen, die geeignet sind, an dem Fasermaterial anzuliegen und eine Verscherung zu bewirken.

Das Verkippen oder Verschwenken der Walzkörper erfolgt dabei innerhalb einer durch das Faserhalbzeug definierten Faserhalbzeugebene. Beim Verkippen oder Verschwenken der Walzkörper in der Faserhalbzeugebene bleibt dabei der Abstand der Rotationsachse des Walzkörpers zum flächigen Faserhalbzeug vorteilhafter Weise unverändert, sodass auch beim Verkippen und Verschwenken der Walzkörper über seine gesamte Rollenbreite weiterhin mit dem flächigen Faserhalbzeug kraftschlüssig kontaktiert bleibt. Lediglich der Angriffswinkel des Walzkörpers ändert sich in Bezug auf die Förderrichtung, sodass eine Kraft quer zur Förderrichtung, insbesondere senkrecht, in das Faserhalbzeug eingebracht wird, und durch die Bahn der Förderrichtung verändert werden kann.

Vorteilhafter Weise kann durch eine gegenüber dem Walzkörper angeordnete Andrückfläche der Kraftschluss des Walzkörpers mit dem Fasermaterial hergestellt werden.

Gemäß einer vorteilhaften Ausführungsform wird bei mindestens einem der Walzkörper ein gegenüberliegender, gegensinnig rotierender Walzkörper in der Verschereinrichtung angeordnet, um eine Walzkörperpaar zu bilden. Die beiden Walzkörper des Walzkörperpaares sind dabei so ausgebildet, dass das Faserhalbzeug in Förderrichtung zwischen den beiden Walzkörpern des Walzkörperpaares geführt werden kann. Beide Walzkörper liegen somit kraftschlüssig an je einer Seite des flächigen Faserhalbzeuges an. Durch die Bildung eines Walzköperpaares erfolgt der Kraftschluss der Walzkörper mit dem Faserhalbzeug. Vorteilhafter Weise sind die beiden gegensinnig rotierenden Walzkörper des Walzkörperpaares gemeinsam verschwenk- oder verkippbar ausgebildet und die Steuereinrichtung zum parallelen Verschwenken oder Verkippen der Walzkörper in Abhängigkeit von den erfassten Positionsinformationen des Faserhalbzeuges eingerichtet. Hierdurch bleibt der Kraftschluss zur Förderung und zur Verscherung des Faserhalbzeuges auch bei der Bahnkorrektur mittels Verschwenken oder Verkippen der Faserhalbzeuge bestehen.

Gemäß einer hierzu vorteilhaften Weiterbildung der Erfindung weist jeder der in Förderrichtung beabstandet angeordneten Walzkörper einen gegenüberliegenden, gegensinnig rotierenden Walzkörper zur Bildung eines jeweiligen Walzkörperpaares auf, sodass für die definierte Verscherung mittels in Förderrichtung beabstandet angeordneter Walzkörper jeweils ein Walzkörperpaar beabstandet in Förderrichtung angeordnet ist. Jedes dieser Walzkörperpaare ist dabei so ausgebildet, dass es verschwenk- oder verkippbar ist, sodass die Steuereinrichtung die Walzkörper des jeweiligen Walzkörperpaares parallel verschwenken oder verkippen kann.

Existieren mindestens zwei Walzkörperpaare in der Verschereinrichtung, so kann durch die Walzkörperpaare und den jeweiligen Walzkörpern gleichzeitig auch eine Vorschubeinheit gebildet werden, die das flächige Faserhalbzeug zwischen den Walzkörpern der Walzkörperpaare führt und somit durch die Verschereinrichtung fördert.

Gemäß einer weiteren vorteilhaften Ausführungsform ist die Vorrichtung eingerichtet, ein gekrümmtes Preformprofil, bspw. ein Z- oder C-Profil, mit einer definierten Krümmung herzustellen. Hierfür weist die Verschereinrichtung der Vorrichtung mindestens drei Walzkörper auf, wobei mindestens zwei der drei Walzkörper an jeweils unterschiedlichen Flanschen des herzustellenden Profils kraftschlüssig anliegen. Diese dabei an jeweils unterschiedlichen Flanschen anliegenden Walzkörper werden dabei mit der gleichen Umlaufgeschwindigkeit durch die Steuereinrichtung eingestellt. Ein weiterer Walzkörper wird hingegen in Förderrichtung beabstandet von diesen beiden Walzkörpern an einem der Flansche angeordnet und von der Steuereinrichtung mit einer von den beiden anderen Walzkörpern verschiedenen Umlaufgeschwindigkeit eingestellt, sodass sich an einem Flansch zwischen den an diesen Flansch anliegenden und beabstandet angeordneten Walzkörpern eine Umlaufgeschwindigkeitsdifferenz einstellen lässt. Diese eingestellte Umlaufgeschwindigkeitsdifferenz führt dann zu einer Verscherung im Innen- oder Außengurt bzw. Innenflansch oder Außenflansch des Preformprofils und ermöglicht so die Herstellung eines gekrümmten Preformprofils mit definierter Verscherung des Fasermaterials und somit kontinuierlich hoher Qualität.

Dabei wird mit Hilfe der Faserhalbzeug-Erfassungsvorrichtung entsprechende Positionsinformationen der Faserhalbzeugflansche des Preformprofils erfasst, sodass einer oder mehrere der an den Flanschen anliegenden Walzkörpern gekippt oder verschwenkt werden kann, um so ein Ausweichen des Fasermaterials während der Förderung durch die Verschereinrichtung entgegenzuwirken und zu kompensieren. Dabei werden die an den Flanschen anliegenden Walzkörper in einer Flanschebene verkippt oder verschwenkt, wobei die Flanschebene durch den jeweiligen Flansch des Preformprofils hergestellt wird.

Gemäß einer vorteilhaften Weiterbildung hierzu ist es ganz besonders vorteilhaft, wenn bei jedem der mindestens drei Walzkörper ein gegenüberliegender, gegensinnig rotierender Walzkörper vorgesehen ist, die jeweils zusammen ein Walzkörperpaar bilden, sodass an einem Flansch mindestens zwei Walzkörperpaare zur Verscherung aufgrund der zwischen den Walzkörperpaaren eingestellten Umlaufgeschwindigkeitsdifferenz angeordnet sind und an dem anderen Flansch zumindest ein Walzkörperpaar, um ein Fördern des Faserhalbzeugsprofils durch die Verschereinrichtung bewirken zu können.

Die Walzkörperpaare sind dabei so ausgebildet, dass die Walzkörper des jeweiligen Walzkörperpaares gemeinsam verschwenk- oder verkippbar ausgebildet sind, wobei das Verschwenken oder Verkippen der Walzkörper in der durch den jeweils kraftschlüssig anliegenden Faserhalbzeugflansch definierten Faserhalbzeug-Flanschebene erfolgt. Die Walzkörper eines Walzkörperpaares werden dabei parallel verschwenkt oder verkippt, sodass ein zwischen den Walzkörperpaaren geführter Faserhalbzeugflansch an den Walzkörper jeweils kraftschlüssig anliegt.

Gemäß einer weiteren vorteilhaften Ausführungsform ist die Steuereinrichtung derart eingerichtet, dass sie während des Umformungsprozesses die Umlaufgeschwindigkeit der Walzkörper derart variieren kann, dass während des gesamten Umformprozesses variierende Umlaufgeschwindigkeitsdifferenzen zwischen den beabstandet angeordneten Walzkörpern einstellbar sind, sodass der Krümmungsradius der Krümmung der herzustellenden Preform variiert werden kann. Dadurch wird es möglich, dass Preformen bzw. Preformprofile herstellbar sind, die einen variierenden Krümmungsradius haben.

Gemäß einer weiteren vorteilhaften Ausführungsform ist die Faserhalbzeug-Erfassungseinrichtung zur Detektion von Faserhalbzeugkanten des zu verscherenden Faserhalbzeuges ausgebildet, wobei aus den detektierten Faserhalbzeugkanten die Positionsinformationen abgeleitet werden können. Hieraus kann insbesondere die Information abgeleitet werden, welche Position das zu verscherende Faserhalbzeug in Bezug auf die Walzkörper hat, genauer welche Position die Faserhalbzeugkanten in Bezug auf die zur Verscherung vorgesehenen Walzkörper hat. In Abhängigkeit hiervon kann dann die Steuereinrichtung die Walzkörper entsprechend verkippen oder verschwenken, um so eine entsprechende Bahnregelung herzustellen.

Unter dem Verkippen der Walzkörper wird insbesondere eine Positionsänderung verstanden, bei der der Walzkörper um eine Achse gedreht wird, die senkrecht zu der Rotationsachse des Walzkörpers steht und insbesondere senkrecht zu dem Faserhalbzeug. Beim Verkippen steht die Drehachse im Bereich des Walzkörpers.

Beim Verschwenken wird der Walzkörper um eine Achse gedreht, die senkrecht zu der Rotationsachse des Walzkörpers und insbesondere zu dem Faserhalbzeug steht, wobei die Drehachse für das Verschwenken außerhalb des Walzkörpers liegt.

Die Erfindung wird anhand der beigefügten Figuren beispielhaft näher erläutert. Es zeigen:
- Figur 1: schematische Darstellung der erfindungsgemäßen Vorrichtung zur Herstellung einer gekrümmten Preform;
- Figur 2: schematische Darstellung einer perspektivischen Darstellung eines C-Profils;
- Figur 3: schematische Darstellung einer verschwenkbaren Walzeinheit mit Walzkörper.

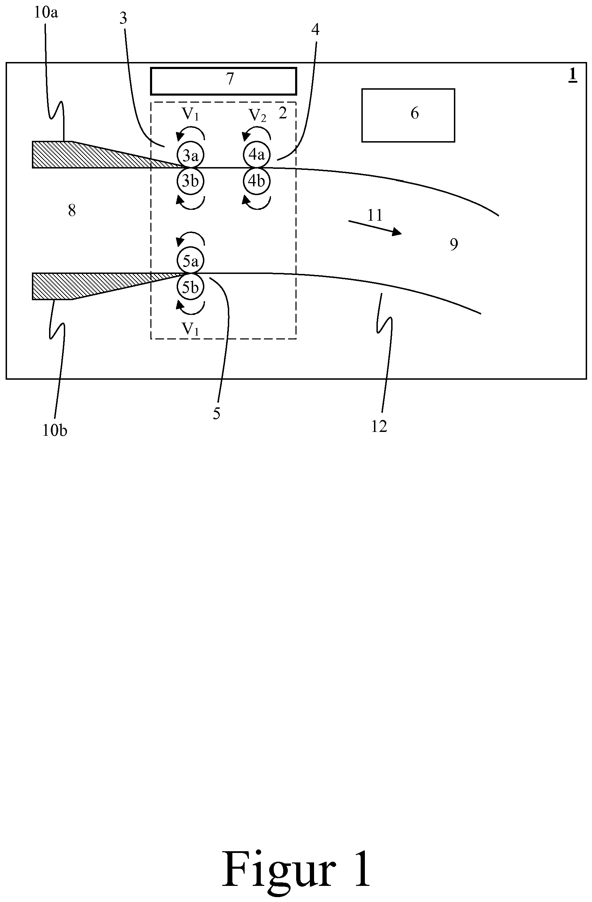

Figur 1 zeigt schematisch vereinfacht die Vorrichtung 1 in einer Draufsicht. Die Vorrichtung 1 hat eine Verschereinrichtung 2, die insgesamt drei Walzenkörperpaare 3, 4 und 5 aufweist. Das Walzkörperpaar 3 hat dabei zwei gegenüberliegend angeordnete Walzkörper 3a und 3b, die gegensinnig rotieren und zwischen denen ein Fasermaterial geführt werden kann. In identischer Weise sind die Walzkörperpaare 4 und 5 ausgebildet, die jeweils über zwei Walzkörper 4a. 4b und 5a, 5b verfügen.

Die Walzkörper der drei Walzkörperpaare 3, 4 und 5 sind mit einer Steuereinrichtung 6 verbunden, welche die einzelnen Walzkörper der Walzkörperpaare derart ansteuert, dass ihre Umlaufgeschwindigkeit V₁, V₂ jeweils einstellbar ist. Die physische Verbindung ist in Figur 1 aus Übersichtlichkeitsgründen nicht gezeigt.

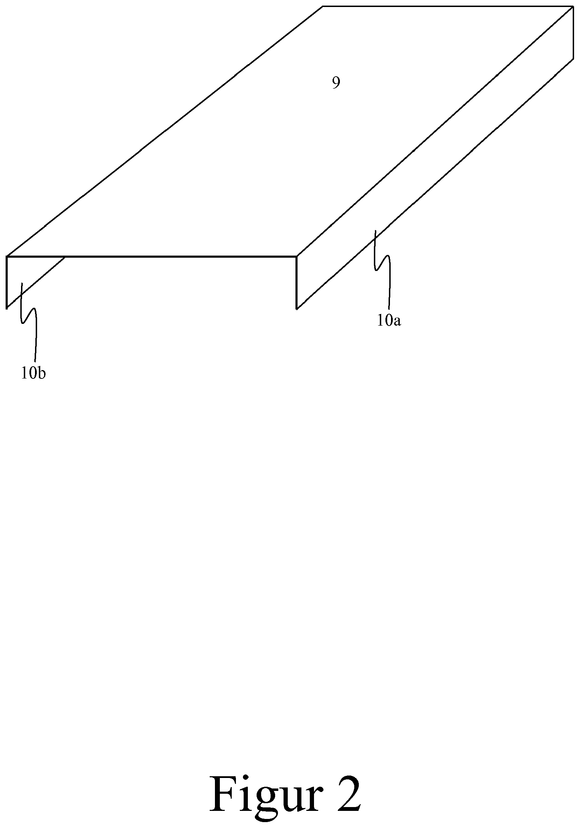

Die Vorrichtung 1 ist im Ausführungsbeispiel der Figur 1 dazu ausgebildet, aus einem flächigen Faserhalbzeug 8 ein gekrümmtes Preformprofil 9, das ein C-Profil wie in Figur 2 dargestellt aufweist, herzustellen. Hierzu werden die Kanten 10a, 10b des flächigen Faserhalbzeuges 8 zwischen die Walzkörper der jeweiligen Walzkörperpaare geführt, sodass die Kanten 10a, 10b des Faserhalbzeuges die späteren Flansche des gekrümmten C-Profils 9 bilden.

Mit dieser Vorrichtung 1 wird somit nicht nur die Krümmung des Prefomrprofils realisiert, sondern gleichzeitig auch die gewünschte Profilform hergestellt.

Die Walzkörperpaare 3 und 5 der Vorrichtung 1 sind dabei jeweils an gegenüberliegenden Kanten bzw. Flanschen des Faserhalbzeuges angeordnet und werden durch die Steuereinrichtung 6 so angesteuert, dass die Walzkörper 3a, 3b und 5a, 5b jeweils dieselbe Umlaufgeschwindigkeit V₁ haben. Das Walzkörperpaar 3 ist dabei an dem Flansch 10a des Preformprofils 8 angeordnet, während das Walzenpaar 5 an dem gegenüberliegenden Flansch 10b des Preformprofils 9 angeordnet ist.

Das Walzkörperpaar 4 mit den Walzkörpern 4a und 4b wird hingegen so angeordnet, dass es von dem Walzkörperpaar 3 in Förderrichtung 10 bzw. Walzrichtung beabstandet an dem Flansch 10a, an dem das Walzkörperpaar 3 angeordnet ist, vorgesehen ist. Die Walzkörperpaare 3 und 4 greifen somit an dem gleichen Flansch 10a des Preformprofils 9 an. Die Umlaufgeschwindigkeit der Walzkörper 4a, 4b des Walzkörperpaares 4 ist dabei von der Umlaufgeschwindigkeit V₁ der Walzkörperpaare 3 und 5 verschieden. Es ergibt sich somit eine Umlaufgeschwindigkeitsdifferenz V₂ - V₁, die zu einer Faserverscherung des Faserhalbzeuges 8 führt und somit zu einer gewünschten Krümmung 12 des Preformprofils 9.

Durch Variation der Umlaufgeschwindigkeitsdifferenz V₂ - V₁ kann der Krümmungsradius der Krümmung 12 entsprechend eingestellt werden, wobei die Steuereinrichtung 6 derart eingerichtet ist, dass sie während des Umformungsprozesses, d.h. während das Faserhalbzeug 8 durch die Verschereinrichtung 2 befördert wird, die Umlaufgeschwindigkeitsdifferenz V₂ - V₁ so einstellen kann, dass sich ein Profil mit unterschiedlichen Krümmungsradien ergibt.

Des Weiteren weist die Vorrichtung 1 eine Faserhalbzeug-Erfassungsvorrichtung 7 auf, welche Positionsinformationen bzgl. des Faserhalbzeuges 8, insbesondere Positionsinformationen bzgl. der Faserhalbzeugflansche 10a und 10b, erfasst. Die Positionsinformationen werden nun der Steuereinrichtung 6 bereitgestellt, sodass die Steuereinrichtung 6 die Walzkörper der Walzkörperpaare 3, 4 und 5 zum Verkippen oder Verschwenken der Walzkörper entsprechend ansteuern kann. Hierdurch soll erreicht werden, dass ein Ausweichen des Faserhalbzeuges aus der vorgegebenen Soll-Bahn entgegengewirkt wird. Sind mehr als 3 Walzkörperpaare vorgesehen, so können auch alle verkipp- oder verschwenkbar ausgebildet sein.

Figur 2 zeigt ein fertig hergestelltes Preformprofil 9, dass jeweils links und rechts umgeformte Flanschen 10a, 10b hat. Durch das Angreifen der Walzkörper der Vorrichtung an den Flanschen 10a, 10b in der zuvor beschriebenen Art und Weise und dem Einstellen einer Geschwindigkeitsdifferenz zwischen den beabstandet angeordneten Walzkörpern lässt sich eine Faserverscherung bewirken, die letztlich zu einer Krümmung des Profils 9 führt.

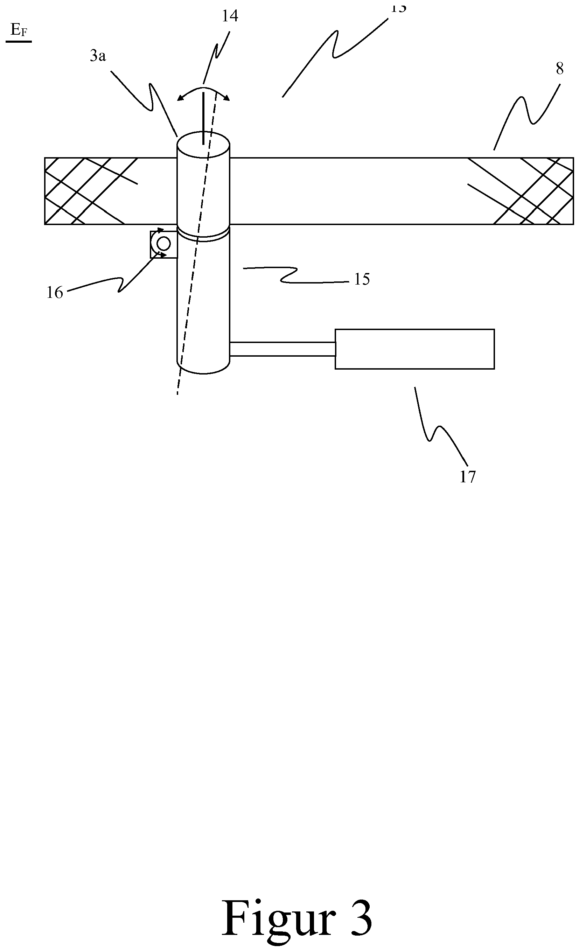

Figur 3 zeigt schematisch eine Walzeinheit 13, die einen Walzkörper 3a aufweist der um eine Rotationsachse 14 rotierend vorgesehen ist. Über eine Antriebseinheit 15 der Walzeinheit 13 kann der Walzkörper 3a um die Rotationsachse 14 rotieren.

An dem Walzkörper 3a der Walzeinheit 13 liegt nun kraftschlüssig ein Teil des Faserhalbzeuges 8 an, um so die zuvor beschriebene Verscherung des Faserhalbzeuges 8 zu bewirken.

Darüber hinaus ist die Walzeinheit 13 so an der Vorrichtung 1 angeordnet, dass sie um eine Schwenkachse 16 verschwenkbar in der Faserhalbzeugebene E_{f} verschwenkt werden kann. Hierzu weist die Walzeinheit 13 einen Linearaktuator 17 auf, mit dem die Walzeinheit um die Schwenkachse 16 verschwenkt werden kann. Durch das Verschwenken der Walzeinheit 13 um die Schwenkachse 16 wird der Angriffswinkel des Walzkörpers 3a bzgl. des Faserhalbzeuges 8 geändert, sodass eine Kraft quer zur Förderrichtung 11 wirkt. Hierdurch kann korrigierend auf die Förderrichtung eingewirkt werden, sodass bspw. das Faserhalbzeug 8 im Ausführungsbeispiel der Figur 3 an dem oberen oder unterem Rand der Figur 3 gefördert wird. Durch das Verschwenken des Walzkörpers 3a in der Faserhalbzeugebene E_{f} wird somit eine Bahnregelung bzgl. der Förderrichtung 11 erreicht, sodass immer optimal eine Soll-Bahn eingestellt ist.

### Bezugszeichenliste

1 Vorrichtung
2 Verschereinrichtung
3 erstes Walzkörperpaar
3a, 3b Walzkörper des ersten Walzkörperpaares
4 zweites Walzkörperpaar
4a, 4b Walzkörper des zweiten Walzkörperpaares 4
5 drittes Walzkörperpaar
5a, 5b Walzkörper des dritten Walzkörperpaares 5
6 Steuereinrichtung
7 Faserhalbzeug-Erfassungsvorrichtung
8 Faserhalbzeug
9 Preformprofil
10a, 10b Flansche des Preformprofils
11 Förderrichtung
12 Profilkrümmung
13 Walzeinheit
14 Rotationsachse eines Walzkörpers
15 Antriebseinheit
16 Schwenkachse
17 Linearaktuator
E_{f} Faserhalbzeugebene

## Patentansprüche

1. Vorrichtung (1) zur Herstellung einer gekrümmten Preform (9) aus flächigen Faserhalbzeugen (8), mit einer Verschereinrichtung (2), die mindestens zwei rotierende, in eine Förderrichtung (11) beabstandet angeordnete Walzkörper (3a, 4a) und eine mit den Walzkörpern (3a, 4a) verbundene Steuereinrichtung (6) aufweist, wobei die Steuereinrichtung (6) zum Einstellen voneinander verschiedener Umlaufgeschwindigkeiten (V₁, V₂) der Walzkörper (3a, 4a) eingerichtet ist und die Walzkörper (3a, 4a) ausgebildet sind, an einem in die Vorrichtung (1) eingebrachten Faserhalbzeug (8) kraftschlüssig anzuliegen und mit diesem derart zusammenzuwirken, dass durch eine zwischen den in Förderrichtung (11) beabstandet angeordneten Walzkörpern (3a, 4a) mittels der Steuereinrichtung (6) eingestellten Umlaufgeschwindigkeitsdifferenz (V₁ - V₂) eine Verscherung der Fasern des Faserhalbzeuges zur Bildung der gekrümmten Preform bewirkt wird, **dadurch gekennzeichnet, dass** zumindest einer der Walzkörper (3a) verschwenk- oder verkippbar ausgebildet ist und eine Faserhalbzeug-Erfassungseinrichtung (7) vorgesehen ist, die zum Erfassen von Positionsinformationen des durch die Verschereinrichtung (2) geförderten Faserhalbzeuges ausgebildet ist, wobei die Steuereinrichtung (2) weiterhin zum Verschwenken oder Verkippen des mindestens einen Walzkörpers (3a) während der Förderung des Faserhalbzeuges in Abhängigkeit von den erfassten Positionsinformationen der Faserhalbzeug-Erfassungseinrichtung () eingerichtet ist.

2. Vorrichtung (1) nach Anspruch 1, **dadurch gekennzeichnet, dass** der mindestens eine Walzkörper (3a) in einer durch das kraftschlüssig anliegende Faserhalbzeug definierten Faserhalbzeugebene (E_{F}) verschwenk- oder verkippbar ausgebildet ist.

3. Vorrichtung (1) nach Anspruch 1 oder 2, **dadurch gekennzeichnet, dass** bei mindestens einem Walzkörper ein gegenüberliegender, gegensinnig rotierender Walzkörper (3a, 3b) zur Bildung eines Walzkörperpaares (3) angeordnet ist, wobei zwischen den gegensinnig rotierenden Walzkörpern des Walzkörperpaares das flächige Faserhalbzeug gefördert wird, und wobei die gegensinnig rotierenden Walzkörper des Walzkörperpaares gemeinsam verschwenk- oder verkippbar ausgebildet sind und die Steuereinrichtung zum parallelen Verschwenken oder Verkippen der Walzkörper des jeweiligen Walzkörperpaares in Abhängigkeit von den erfassten Positionsinformationen der Faserhalbzeug-Erfassungseinrichtung eingerichtet ist.

4. Vorrichtung nach Anspruch 3, **dadurch gekennzeichnet, dass** jeder der in Förderrichtung beabstandet angeordnete Walzkörper einen gegenüberliegenden, gegensinnig rotierenden Walzkörper zur Bildung eines jeweiligen Walzkörperpaares hat.

5. Vorrichtung nach einem der vorhergehenden Ansprüche, **dadurch gekennzeichnet, dass** die Verschereinrichtung mindestens drei Walzkörper hat, von denen mindestens zwei Walzkörper an jeweils verschiedenen Flanschen eines herzustellenden Preformprofils anliegen und der mindestens eine weitere, dritte Walzkörper an einem der Flansche zu dem an diesem Flansch anliegenden Walzkörper in Förderrichtung beabstandet angeordnet anliegt, und wobei die Steuereinrichtung eingerichtet ist, bei den mindestens zwei an verschiedenen Flanschen des Preformprofils anliegenden Walzkörpern dieselbe Umlaufgeschwindigkeit einzustellen und bei dem am selben Flansch in Förderrichtung beabstandet angeordneten Walzkörper eine hiervon verschiedene Umlaufgeschwindigkeit einzustellen, um durch die Umlaufgeschwindigkeitsdifferenz der am selben Flansch anliegenden Walzkörper die Verscherung der Fasern zu bewirken, wobei zumindest die zwei an verschiedenen Flanschen des Preformprofils anliegenden Walzkörper verschwenk- oder verkippbar ausgebildet ist, wobei die Faserhalbzeug-Erfassungseinrichtung zum Erfassen von Positionsinformationen des jeweiligen Flansches des Preformprofils ausgebildet ist und die Steuereinrichtung zum Verschwenken oder Verkippen der mindestens zwei Walzkörper in Abhängkgiet von den Positionsinformationen des jeweiligen Flansches eingerichtet ist.

6. Vorrichtung nach Anspruch 5, **dadurch gekennzeichnet, dass** bei jedem der mindestens drei Walzkörper ein gegenüberliegender, gegensinnig rotierender Walzkörper zur Bildung eines Walzkörperpaares angeordnet ist, zwischen denen der jeweilige Flansch des herzustellenden Preformprofils gefördert wird, wobei die gegensinnig rotierenden Walzkörper des jeweiligen Walzkörperpaares gemeinsam verschwenk- oder verkippbar ausgebildet sind und die Steuereinrichtung zum parallelen Verschwenken oder Verkippen der Walzkörper des jeweiligen Walzkörperpaares in Abhängigkeit von den erfassten Positionsinformationen der Faserhalbzeug-Erfassungseinrichtung eingerichtet ist.

7. Vorrichtung nach einem der vorhergehenden Ansprüche, **dadurch gekennzeichnet, dass** die Steuereinrichtung eingerichtet ist, während des Umformprozesses die Umlaufgeschwindigkeit der Walzkörper derart zu variieren, dass der Krümmungsradius der Krümmung der herzustellenden Preform variiert.

8. Vorrichtung nach einem der vorhergehenden Ansprüche, **dadurch gekennzeichnet, dass** die Faserhalbzeug-Erfassungseinrichtung zur Detektion von Faserhalbzeugkanten des zu verscherenden Faserhalbzeuges und zum Erfassen der Positionsinformationen in Abhängigkeit von den detektierten Faserhalbzeugkanten ausgebildet ist.

9. Verfahren zur Herstellung einer gekrümmten Preform aus einem flächigen Faserhalbzeug, mit
a) Einbringen des flächigen Faserhalbzeuges in eine Verschereinrichtung, die mindestens zwei rotierende, in Förderrichtung beabstandet angeordnete Walzkörper und eine mit den Walzkörpern verbundene Steuereinrichtung hat, wobei das eingebrachte Faserhalbzeug kratfschlüssig an den Walzkörpern anliegt, und
b) Einstellen einer Umlaufgeschwindigkeit für jeden Walzkörper derart, dass durch eine zwischen den in Förderrichtung beabstandet angeordneten Walzkörpern mittels der Steuereinrichtung eingestellten Umlaufgeschwindigkeitsdifferenz eine Verscherung der Fasern des Faserhalbzeuges zur Bildung der Krümmung der herzustellenden Preform bewirkt wird,
**gekennzeichnet durch**
c) Erfassen von Positionsinformationen des durch die Verschereinrichtung geförderten Faserhalbzeuges mittels einer Faserhalbzeug-Erfassungseinrichtung und
d) Verschwenken oder Verkippen zumindest eines der Walzkörper während der Förderung des Faserhalbzeuges in Abhängigkeit von den erfassten Positionsinformationen des Faserhalbzeuges mittels Ansteuerung der Walzkörper durch die Steuereinrichtung.

10. Verfahren nach Anspruch 9, **dadurch gekennzeichnet, dass** das flächige Faserhalbzeug derart in die Verschereinrichtung eingebracht wird, dass das Faserhalbzeug zwischen gegensinnig rotierenden Walzkörpern, die ein Walzkörperpaar bilden, geführt werden, wobei die Walzkörper eines Walzkörperpaares gemeinsam und parallel in Abhängigkeit von den erfassten Positionsinformationen des Faserhalbzeuges mittels Ansteuerung der Walzkörper durch die Steuereinrichtung in der Faserhalbzeugebene verschwenkt oder verkippt werden.

11. Verfahren nach Anspruch 9 oder 10, **dadurch gekennzeichnet, dass** das flächige Faserhalbzeug derart in die Verschereinrichtung eingebracht wird, dass das Faserhalbzeug an mindestens zwei Walzkörpern mit jeweils verschiedenen Flanschen eines aus dem Faserhalbzeug herzustellenden Preformprofils anliegt und mit mindestens einem weiteren Walzkörper an einem Flansch zu dem an diesem Flansch anliegenden Walzkörper in Förderrichtung beabstandet angeordnet anliegt, wobei die Umlaufgeschwindigkeiten der Walzkörper mittels der Steuereinrichtung derart eingestellt werden, dass bei den mindestens zwei an verschiedenen Flanschen anliegenden Walzkörpern dieselbe Umlaufgeschwindigkeit und bei dem am selben Flansch in Förderichtung beabstandet angeordneten Walzkörper eine hiervon verschiedene Umlaufgeschwindigkeit vorgesehen ist, wobei Positionsinformationen des jeweiligen Flansches des Preformprofiles mittels der Faserhalbzeug-Erfassungseinrichtung erfasst und in Abhängigkeit hiervon die Walzkörper in der durch den jeweils kraftschlüssig anliegenden Faserhalbzeugflansch definierten Faserhalbzeug-Flanschebene verschwenkt oder verkippt werden.

12. Verfahren nach einem der Ansprüche 9 bis 11, **dadurch gekennzeichnet, dass** während des Umformprozesses die Umlaufgeschwindigkeit der Walzkörper variiert wird, um den Krümmungsradius der Krümmung der herzustellenden Preform zu variieren.

13. Verfahren nach einem der Ansprüche 9 bis 12, **dadurch gekennzeichnet, dass** Faserhalbzeugkanten des zu verscherenden Faserhalbzeuges detektiert und die Positionsinformationen in Abhängigkeit von den detektierten Faserhalbzeugkanten erfasst werden, mittels der Faserhalbzeug-Erfassungseinrichtung.

## Claims

1. A device (1) for producing a curved preform (9) from flat semi-finished fiber products (8), comprising a shearing arrangement (2), which has at least two rotating roll bodies (3a, 4b) arranged at a distance from one another in a conveying direction (11) and a control arrangement (6) connected to the roll bodies (3a, 4a), wherein the control arrangement (6) is designed to set rotational speeds (V₁, V₂) of the roll bodies (3a, 4a), which speeds are different from one another, and the roll bodies (3a, 4a) are formed so as to bear in a frictionally engaged manner against a semi-finished fiber product (8) introduced into the device (1) and to cooperate therewith in such a way that a shearing of the fibers of the semi-finished fiber product is produced by a rotational speed difference (V₁ - V₂) set by means of the control arrangement (6) between the roll bodies (3a, 4a) arranged at a distance from one another in the conveying direction (11) in order to form the curved preform, **characterized in that** at least one of the roll bodies (3a) can be pivoted or tilted and a semi-finished fiber product detection arrangement (7) is provided which is formed so as to detect position information relating to the semi-finished fiber product conveyed through the shearing arrangement (2), wherein the control arrangement (2) is also designed to pivot or tilt the at least one roll body (3a) as the semi-finished fiber product is conveyed, depending on the detected position information of the semi-finished product detection arrangement ().

2. The device (1) as claimed in claim 1, **characterized in that** the at least one roll body (3a) can be pivoted or tilted in a semi-finished fiber product plane (E_{F}) defined by the semi-finished fiber product bearing against the roll body in a frictionally engaged manner.

3. The device (1) as claimed in claim 1 or 2, **characterized in that**, for at least one of the roll bodies, an oppositely arranged roll body (3a, 3b) rotating in the opposite direction is arranged in order to form a roll body pair (3), wherein the flat semi-finished fiber product is conveyed between the roll bodies rotating in opposite directions of the roll body pair, and wherein the roll bodies rotating in opposite directions of the roll body pair can be pivoted or tilted jointly and the control arrangement is designed to pivot or tilt the roll bodies of the particular roll body pair in parallel depending on the detected position information of the semi-finished fiber product detection arrangement.

4. The device as claimed in claim 3, **characterized in that** each of the roll bodies arranged at a distance from one another in the conveying direction has an oppositely arranged roll body rotating in the opposite direction so as to form roll body pairs.

5. The device according to any one of the preceding claims, **characterized in that** the shearing arrangement has at least three roll bodies, of which at least two roll bodies bear against different flanges of a preform profile to be produced and the at least one further, third roll body bears against one of the flanges in a manner arranged at a distance in the conveying direction from the roll body bearing against this flange, and wherein the control arrangement is designed to set the same rotational speed at the at least two roll bodies bearing against different flanges of the preform profile and to set a different rotational speed at the roll body arranged at a distance in the conveying direction at the same flange so as to produce the shearing of the fibers as a result of the rotational speed difference of the roll bodies bearing against the same flange, wherein at least the two roll bodies bearing against different flanges of the preform profile can be pivoted or tilted, wherein the semi-finished fiber product detection arrangement is formed so as to detect position information relating to the flanges of the preform profile and the control arrangement is designed to pivot or tilt the least two roll bodies depending on the position information relating to the flanges.

6. The device as claimed in claim 5, **characterized in that**, for each of the at least three roll bodies, an oppositely arranged roll body rotating in the opposite direction is arranged in order to form a roll body pair, between which the particular flange of the preform profile to be produced is conveyed, wherein the roll bodies rotating in opposite directions of the particular roll body pair can be pivoted or tilted jointly and the control arrangement is designed to pivot or tilt the roll bodies of the particular roll body pair in parallel depending on the detected position information of the semi-finished fiber product detection arrangement.

7. The device as claimed in any one of the preceding claims, **characterized in that** the control arrangement is designed, during the forming process, to vary the rotational speed of the roll bodies in such a way that the radius of curvature of the curvature of the preform to be produced varies.

8. The device as claimed in any one of the preceding claims, **characterized in that** the semi-finished fiber product detection device is formed so as to detect semi-finished fiber product edges of the semi-finished fiber product to be sheared and to detect the position information depending on the detected semi-finished fiber product edges.

9. A method for producing a curved preform from a flat semi-finished fiber product, comprising the following steps
a) introducing the flat semi-finished fiber product into a shearing arrangement which has at least two rotating roll bodies arranged at a distance from one another in the conveying direction and a control arrangement connected to the roll bodies, wherein the introduced semi-finished fiber product bears in a fictionally engaged manner against the roll bodies, and
b) setting a rotational speed for each roll body in such a way that a shearing of the fibers of the semi-finished fiber product is produced by a rotational speed difference set by means of the control arrangement between the roll bodies arranged at a distance from one another in the conveying direction so as to form the curvature of the preform to be produced,
**characterized by**
c) detecting position information relating to the semi-finished fiber product conveyed through the shearing arrangement by means of a semi-finished fiber product detection arrangement, and
d) pivoting or tilting at least one of the roll bodies as the semi-finished fiber product is conveyed, depending on the detected position information relating to the semi-finished fiber product by means of actuation of the roll bodies by the control arrangement.

10. The method as claimed in claim 9, **characterized in that** the flat semi-finished fiber product is introduced into the shearing arrangement in such a way that the semi-finished fiber product is guided between roll bodies rotating in opposite directions which form a roll body pair, wherein the roll bodies of a roll body pair are pivoted or tilted in parallel in the semi-finished fiber product plane by means of actuation of the roll bodies by the control arrangement depending on the detected position information relating to the semi-finished fiber product.

11. The method as claimed in claim 9 or 10, **characterized in that** the flat semi-finished fiber product is introduced into the shearing arrangement in such a way that the semi-finished fiber product bears against at least two roll bodies, in each case via different flanges of a preform profile to be produced from the semi-finished fiber product, and at least one further roll body bears against a flange in a manner arranged at a distance in the conveying direction from the roll bodies bearing against this flange, wherein the rotational speeds of the roll bodies are set by means of the control arrangement in such a way that the same rotational speed is provided at the at least two roll bodies bearing against different flanges and a different rotational speed is provided at the roll body arranged at the same flange in a manner distanced in the conveying direction, wherein position information relating to the flanges of the preform profile is detected by means of the semi-finished fiber product detection arrangement and, on the basis of this information, the roll bodies are pivoted or tilted in the semi-finished fiber product flange plane defined by the semi-finished fiber product flange bearing against the roll bodies in a frictionally engaged manner.

12. The method as claimed in any one of claims 9 to 11, **characterized in that** the rotational speed of the roll bodies is varied during the forming process in order to vary the radius of curvature of the curvature of the preform to be produced.

13. The method as claimed in any one of claims 9 to 12, **characterized in that** semi-finished fiber product edges of the semi-finished fiber product to be sheared are detected by means of the semi-finished product detection arrangement and the position information is detected by said arrangement depending on the detected semi-finished fiber product edges.

## Revendications

1. Dispositif (1) pour la fabrication d'une préforme courbe (9) à partir de produits semi-finis fibreux plats (8), comprenant un dispositif de cisaillement (2) qui présente au moins deux corps de roulement rotatifs (3a, 4a), espacés l'un de l'autre dans une direction de transport (11) et un dispositif de commande (6) connecté aux corps de roulement (3a, 4a), le dispositif de commande (6) étant prévu pour ajuster des vitesses périphériques différentes l'une de l'autre (V₁, V₂) des corps de roulement (3a, 4a) et les corps de roulement (3a, 4a) étant réalisés de manière à s'appliquer par engagement par force contre un produit semi-fini fibreux (8) introduit dans le dispositif (1) et pour coopérer avec celui-ci de telle sorte qu'un cisaillement des fibres du produit semi-fini fibreux soit réalisé par une différence de vitesse périphérique (V₁ - V₂) ajustée entre les corps de roulement (3a, 4a) disposés à distance l'un de l'autre dans la direction de transport (11) au moyen du dispositif de commande (6), pour former la préforme courbe, **caractérisé en ce qu'**au moins l'un des corps de roulement (3a) est réalisé de manière à pouvoir pivoter ou basculer et un dispositif de détection de produits semi-finis fibreux (7) est prévu, lequel est réalisé pour détecter des informations relatives à la position du produit semi-fini fibreux transporté à travers le dispositif de cisaillement (2), le dispositif de commande (2) étant en outre prévu pour faire pivoter ou basculer l'au moins un corps de roulement (3a) pendant le transport du produit semi-fini fibreux en fonction des informations de position détectées du dispositif de détection de produits semi-finis fibreux ().

2. Dispositif (1) selon la revendication 1, **caractérisé en ce que** l'au moins un corps de roulement (3a) est réalisé de manière à pouvoir pivoter ou basculer dans un plan de produit semi-finis fibreux (E_{F}) défini par le produit semi-fini fibreux s'appliquant par engagement par force.

3. Dispositif (1) selon la revendication 1 ou 2, **caractérisé en ce que** dans le cas d'au moins un corps de roulement, un corps de roulement opposé tournant en sens inverse (3a, 3b) est disposé de manière à former une paire de corps de roulement (3), le produit semi-fini fibreux plat étant transporté entre les corps de roulement tournant en sens inverse de la paire de corps de roulement, et les corps de roulement tournant en sens inverse de la paire de corps de roulement étant réalisés de manière à pouvoir pivoter ou basculer ensemble et le dispositif de commande étant prévu pour faire pivoter ou basculer en parallèle les corps de roulement de la paire de corps de roulement respective en fonction des informations de position détectées du dispositif de détection de produit semi-fini fibreux.

4. Dispositif selon la revendication 3, **caractérisé en ce que** chacun des corps de roulement disposés à distance l'un de l'autre dans la direction de transport présente un corps de roulement opposé tournant en sens inverse de manière à former une paire de corps de roulement respective.

5. Dispositif selon l'une quelconque des revendications précédentes, **caractérisé en ce que** le dispositif de cisaillement présente au moins trois corps de roulement dont au moins deux corps de roulement s'appliquent à chaque fois contre différentes brides d'un profilé de préforme à fabriquer et l'au moins un troisième corps de roulement supplémentaire s'applique contre l'une des brides de manière disposée dans la direction de transport à distance du corps de roulement s'appliquant contre cette bride, et le dispositif de commande étant prévu, dans le cas des au moins deux corps de roulement s'appliquant contre des brides différentes du profilé de préforme, de manière à ajuster la même vitesse périphérique et dans le cas du corps de roulement disposé à distance dans la direction de transport sur la même bride, de manière à ajuster une vitesse périphérique différente de celle-ci, afin de provoquer le cisaillement des fibres par la différence de vitesse périphérique des corps de roulement s'appliquant contre la même bride, au moins les deux corps de roulement s'appliquant sur des brides différentes du profilé de préforme étant réalisé de manière à pouvoir pivoter ou basculer, le dispositif de détection de produits semi-finis fibreux étant réalisé pour détecter des informations de position de la bride respective du profilé de préforme et le dispositif de commande étant prévu pour faire pivoter ou basculer les au moins deux corps de roulement en fonction des informations de position de la bride respective.

6. Dispositif selon la revendication 5, **caractérisé en ce que** dans le cas de chacun des au moins trois corps de roulement, un corps de roulement opposé, tournant en sens inverse, est prévu pour former une paire de corps de roulement entre lesquels la bride respective du profilé de préforme à fabriquer est transportée, les corps de roulement tournant en sens inverse de la paire de corps de roulement respective étant réalisés de manière à pouvoir pivoter ou basculer ensemble et le dispositif de commande étant prévu pour faire pivoter ou basculer parallèlement les corps de roulement de la paire de corps de roulement respective en fonction des informations de position détectées du dispositif de détection de produits semi-finis fibreux.

7. Dispositif selon l'une quelconque des revendications précédentes, **caractérisé en ce que** le dispositif de commande est prévu pour faire varier la vitesse périphérique des corps de roulement pendant le processus de formage, de telle sorte que le rayon de courbure de la courbure de la préforme à fabriquer varie.

8. Dispositif selon l'une quelconque des revendications précédentes, **caractérisé en ce que** le dispositif de détection de produits semi-finis fibreux est réalisé de manière à détecter des arêtes de produit semi-fini fibreux du produit semi-fini fibreux à cisailler et à détecter des informations de position en fonction des arêtes du produit semi-fini fibreux détecté.

9. Procédé de fabrication d'une préforme courbe à partir d'un produit semi-fini fibreux plat, comprenant
a) l'introduction du produit semi-fini fibreux plat dans un dispositif de cisaillement présentant au moins deux corps de roulement rotatifs, disposés à distance l'un de l'autre dans la direction de transport et un dispositif de commande connecté aux corps de roulement, le produit semi-fini fibreux introduit s'appliquant par engagement par force sur les corps de roulement, et
b) l'ajustement d'une vitesse périphérique pour chaque corps de roulement de telle sorte qu'un cisaillement des fibres du produit semi-fini fibreux soit réalisé par une différence de vitesse périphérique ajustée entre les corps de roulement disposés à distance l'un de l'autre dans la direction de transport au moyen du dispositif de commande, pour former la courbure de la préforme à fabriquer,
**caractérisé par**
c) la détection d'informations de position du produit semi-fini fibreux transporté par le dispositif de cisaillement au moyen d'un dispositif de détection de produits semi-finis fibreux et
d) le pivotement ou le basculement d'au moins l'un des corps de roulement pendant le transport du produit semi-fini fibreux en fonction des informations de position détectées du produit semi-fini fibreux au moyen d'une commande des corps de roulement par le dispositif de commande.

10. Procédé selon la revendication 9, **caractérisé en ce que** le produit semi-fini fibreux plat est introduit dans le dispositif de cisaillement de telle sorte que le produit semi-fini fibreux soit guidé entre des corps de roulement tournant en sens inverse, qui forment une paire de corps de roulement, les corps de roulement d'une paire de corps de roulement étant basculés ou pivotés en commun et parallèlement dans le plan du produit semi-fini fibreux en fonction des informations de position détectées du produit semi-fini fibreux au moyen d'une commande des corps de roulement par le dispositif de commande.

11. Procédé selon la revendication 9 ou 10, **caractérisé en ce que** le produit semi-fini fibreux plat est introduit dans le dispositif de cisaillement de telle sorte que le produit semi-fini fibreux s'applique contre au moins deux corps de roulement avec des brides respectivement différentes d'un profilé de préforme à fabriquer à partir du produit semi-fini fibreux et avec au moins un corps de roulement supplémentaire contre une bride de manière espacée dans la direction de transport par rapport au corps de roulement s'appliquant contre cette bride, les vitesses périphériques des corps de roulement étant ajustées au moyen du dispositif de commande de telle sorte que dans le cas des au moins deux corps de roulement s'appliquant contre des brides différentes, la même vitesse périphérique soit prévue et que dans le cas du corps de roulement disposé sur la même bride à distance dans la direction de transport, une vitesse périphérique différente de celle-ci soit prévue, des informations de position de la bride respective du profilé de préforme étant détectées au moyen du dispositif de détection de produits semi-finis fibreux et, en fonction de celles-ci, les corps de roulement étant pivotés ou basculés dans le plan de la bride du produit semi-fini fibreux défini par la bride du produit semi-fini fibreux s'appliquant à chaque fois par engagement par force.

12. Procédé selon l'une quelconque des revendications 9 à 11, **caractérisé en ce que** pendant le processus de formage, la vitesse périphérique des corps de roulement est variée afin de faire varier le rayon de courbure de la courbure de la préforme à fabriquer.

13. Procédé selon l'une quelconque des revendications 9 à 12, **caractérisé en ce que** des arêtes de produits semi-finis fibreux du produit semi-fini fibreux à cisailler sont détectées et les informations de position sont détectées en fonction des arêtes de produits semi-finis fibreux détectées au moyen du dispositif de détection de produits semi-finis fibreux.
